# EUROPEAN PATENT APPLICATION

(11) **EP 1 032 096 A2**
(43) Date of publication of application: **30.08.2000**
(21) Application number: 00102269.8
(22) Date of filing: 16.02.2000
(51) Int. Cl.: H01S 3/067, H01S 3/094

(54) **Optical fiber amplifier and method of amplifying an optical signal**

(30) Priority: 24.02.1999 JP 4692499
(71) Applicant: NEC CORPORATION, Tokyo (JP)
(72) Inventor: Kanda, Masahiro, Minato-ku, Tokyo (JP)
(74) Representative: VOSSIUS & PARTNER

(57) **Abstract**

An optical signal is inputted to an erbium doped optical fiber. A 975 nm band pumping light and a 978 nm band pumping light are inputted to the erbium doped optical fiber from an input side and an output side of the erbium doped optical fiber, respectively, whereby the erbium doped fiber amplifies the optical signal.

## Description

The present invention is related to an optical fiber amplifier and a method of amplifying an optical signal, and in particular to an optical fiber amplifier and a method of amplifying an optical signal operable under stable and noiseless conditions with low power consumption.

There are three pumping methods for a conventional optical fiber amplifiers. Namely, they are a forward pumping method, a backward pumping method, and a bidirectional pumping method. In the forward pumping method, a pumping light source is arranged on an optical signal input side of an erbium doped optical fiber (EDF). In the backward pumping method, a pumping light source is arranged on an optical signal output side of an erbium doped optical fiber (EDF). In the bidirectional pumping method, pumping light sources are arranged on both optical signal input and output sides of an erbium doped optical fiber (EDF).

The forward pumping method has the advantage of a small noise figure. The backward pumping method is featured by that high output power can be obtained. The bidirectional pumping method possesses the advantages of both the forward and backward pumping methods.

One class of pumping light sources for an erbium doped optical fiber amplifier (EDFA), may be called the 1480 nm class as its wavelength band is nominally centered at 1480 nm. This class will be referred to herein as the 1480 nm class pumping light source. This 1480 nm class pumping light source may be used in the forward, backward and bidirectional pumping methods. Another class of pumping light sources may be called the 980 nm class as its wavelength band is nominally centered at 980 nm. This 980 nm class pumping light source can also be used in the forward, backward and bidirectional pumping method. Moreover, in the bidirectional pumping method, both of the 980 nm class and 1480 nm class pumping light sources can be used for a forward pumping light source and a backward pumping light source, respectively. The use of the 980 nm class pumping light has the advantage that the pumping light source is operable under low power consumption and low noise conditions as compared with the pumping light source of the 1480 nm class.

On the other hand, the use of the 1480 nm class pumping light has the advantage of large energy conversion efficiency as the EDF becomes large, as compared with the 980 nm class pumping light. Since high density is carried out by way of WDM (wavelength division multiplex) communication system, high output power of an optical fiber amplifier has been required. One effective means of achieving high density and high output power of optical amplifiers uses a plurality of pumping light sources

Various developments of pumping light sources have been made wherein a plurality of 1480 nm class pumping light sources are employed as pumping light sources for an optical fiber amplifier, energy converting efficiencies of which for EDFs are high. However, since a pumping light source the 1480 nm class produces large noise and also requires high power consumption, these pumping light sources are not practically available.

Optical amplifiers that employ 980 nm class pumping light sources have been attempted, since these light sources can be operated under low noise condition and also with low power consumption. However, there is difficulty using 980 nm class pumping light sources with the bidirectional pumping method, and thus they can not be practically used.

One such problem arises as while compact optical isolators with low insertion loss are available for a 1480 nm class pumping light source, no optical isolators with low insertion loss are now commercially available for a 980 nm class pumping light source. Thus, in the bidirectional pumping method wherein the 980 nm class pumping light sources are used, there is a problem that input of the pumping light from one pumping light source causes optical interference to the other pumping light.

It is therefore an object of the present invention to provide an optical fiber amplifier and a method of amplifying an optical signal capable of stably amplifying an optical signal using a bidirecitonal pumping method.

It is therefore a further object of the present invention to provide an optical fiber amplifier and a method of amplifying an optical signal capable of amplifying an optical signal using a 980 nm class pumping light. In order to achieve the above objects, an optical fiber amplifier according to an embodiment of the present invention comprises an optical fiber to which an optical signal is input, a first light source for supplying a first pumping light to the optical fiber, the first pumping light having a first center wavelength of a 980 rim class pumping light, whereby said optical fiber amplifies the optical signal, and a second light source for supplying a second pumping light to the optical fiber, the second pumping light having a second center wavelength of the 980 nm class pumping light, the second center wavelength being different from the first center wavelength, whereby the optical fiber amplifies the optical signal.

Another optical fiber amplifier according to an embodiment of the present invention comprises an optical fiber to which an optical signal is input, a first light source for supplying a first pumping light to the optical fiber, the first pumping light having a first center wavelength, whereby said optical fiber amplifies the optical signal, and a second light source for supplying a second pumping light to the optical fiber, the second pumping light having a second center wavelength separated from the first center wavelength by at least 1 nm, whereby the optical fiber amplifies the optical signal.

In order to achieve the above objects, a method of amplifying an optical signal, according to an embodiment of the present invention, comprises inputting an optical signal to an optical fiber which has an input side and an output side, supplying a first pumping light to the input side of the optical fiber, whereby amplifying the optical signal, wherein the first pumping light has a first center wavelength of a 980 nm class pumping light, and supplying a second pumping light to the output side of the optical fiber, whereby amplifying the optical signal, wherein the second pumping light has a second center wavelength of a 980 nm class pumping light and the second center wavelength is different from the first center wavelength.

Another method of amplifying an optical signal, according to an embodiment of the present invention, comprises inputting an optical signal to an optical fiber which has an input side and an output side, supplying a first pumping light to the input side of the optical fiber, whereby amplifying the optical signal, wherein the first pumping light has a first center wavelength, and supplying a second pumping light to the output side of the optical fiber, whereby amplifying the optical signal, wherein the second pumping light has a second center wavelength separated from the first center wavelength by at least 1 nm.

These and other objects, features and advantages of this invention will become more fully apparent from the following detailed description taken with the accompanying drawings in which:
FIG. 1 is a diagram for showing an optical fiber amplifier according to an embodiment of the present invention;
FIG. 2 is a diagram for showing a first embodiment of a pumping light source shown in FIG. 1;
FIG. 3 is a diagram for showing a second embodiment of a pumping light source shown in FIG. 1;
FIG. 4 is a graphic representation for indicating a transmission characteristic of a band pass filter contained in a pumping light source shown in FIG. 1;
FIG. 5 is a graphic representation for indicating an oscillation characteristic of a pumping light source shown in FIG. 1.

Now, preferred embodiments of the present invention will be discussed referring to the drawings.

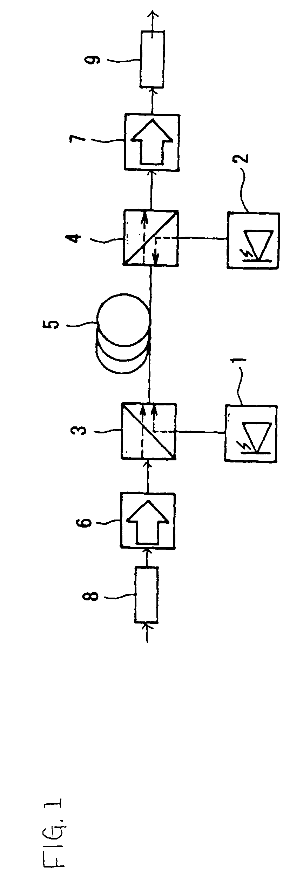

As shown in FIG. 1, an optical fiber amplifier according to the present invention includes pumping light sources 1 and 2, WDM (wavelength division multiplex) couplers 3 and 4, an EDF (erbium doped fiber) 5, optical isolators 6 and 7, an input terminal 8 and an output terminal 9.

Each of elements included in this optical fiber amplifier is arranged in the order of the input terminal 8, the optical isolator 6, the WDM coupler 3, the EDF 5, the WDM coupler 4, the optical isolator 7 and the output terminal 9. In this connection, the pumping light sources 1 and 2 are respectively connected to the WDM couplers 3 and 4, whereby they perform a bidirectional pumping method.

Each of the pumping light sources 1 and 2 employs an LD (laser diode) module equipped with an external resonator and containing a BPF (band pass filter) . A center wavelength of the pumping light source 1 is separated from that of the pumping light source 2 by at least approximately 1 nm, preferably within the range of 1 to 10 nm. The detail structures of the pumping light sources 1 and 2 will be discussed later.

The WDM coupler 3 synthesizes a pumping light from the pumping light source 1 with an optical signal inputted from the input terminal 8 to input them together to the EDF 5. The WDM coupler 4 inputs a pumping light from the pumping light source 2 to the EDF 5 and separates an amplified optical signal outputted from the EDF 5 from the pumping light from the pumping light source 2.

Erbium are doped in the EDF 5 as a rare earth element. The EDF 5 amplifies an optical signal inputted through the input terminal 8, the optical isolator 6 and the WDM coupler 3 by the pumping lights.

Each of the optical isolators 6 and 7 transmits the optical signal inputted from the input terminal 8 to the output terminal 9 only in one direction and is arranged to remove the influence of reflection light to transmission lines.

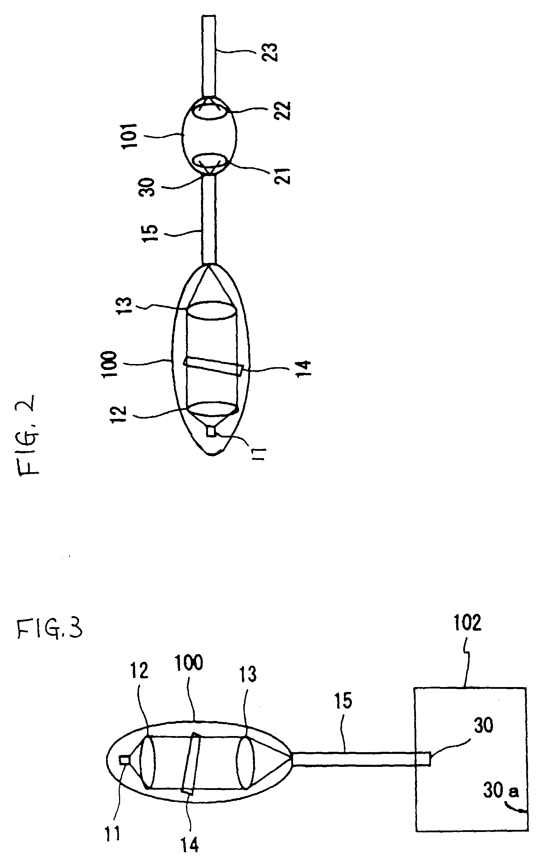

Next, a first embodiment of a pumping light source shown in FIG. 1 is described with reference to FIG. 2.

Each of the pumping light sources 1 and 2 has an LD (laser diode) module unit 100 and a collimator module unit 101.

The LD module unit 100 includes a Fabry-Perot type LD element 11 operable in an oscillation wavelength within the 980 nm band, a collimator lens 12 for converting light emitted from the LD module element 11 into collimated light, a condenser lens 13 for condensing the collimated light, a band pass filter (BPF) 14 which may pass therethrough light within the 980 nm band, and the half-width of the BPF 14 is within the range of substantially 1 to 5 nm, preferably the range of 2 to 3 nm. The half-width of the BPF 14 indicates the difference between a minimum wavelength and a maximum wavelength when transmission characteristic of the BPF 14 is at one-half of its peak level.

Also, the center wavelength of light to pass through BPF 14 is set at 975 nm for the pumping light source 1, and, 978 nm for the pumping light source 2. Namely, values of the center wavelength employed for the pumping light sources 1 and 2 are different from each other. The difference between these center wavelengths may be selected from a range of 1 to 10 nm.

The LD module unit 100 and the collimator module unit 101 are connected by an optical fiber 15. The condensed light from the condenser lens 13 is coupled to the optical fiber 15. The optical fiber 15 has a length longer than, or equal to approximately 50 cm, and also has a reflection point 30 for reflecting light to be outputted. The reflection point 30 is formed with a low reflection film which is ion-vapored on a ferrule edge plane of the optical fiber 15. The reflectivity thereof is selected to be 0.1 to 50%, preferably 2 to 10%.

The collimator module unit 101 internally includes a collimate lens 21 for converting light outputted from the optical fiber 15 into collimated light, and a condenser lens 22 for condensing the collimated light. An optical fiber 23 is coupled to the collimator module unit 101. Thereby stabilized light is outputted to an external unit (not shown).

Next, an operation of a first embodiment of an optical fiber amplifier will be discussed below.

An optical signal inputted from the input terminal 8 passes through both the optical isolator 6 and the WDM coupler 3, and then is inputted into the EDF 5.

On the other hand, a pumping light supplied from the pumping light source 1 is inputted by the WDM coupler 3 into the EDF 5, whereas a pumping light supplied from the pumping light source 2 is inputted by the WDM coupler 4 into the EDF 5.

While the optical signal inputted into the EDF 5 passes through erbium ions within the EDF 5, which are pumped to a high energy level by the pumping lights inputted from both the pumping light sources 1 and 2, the optical signal absorbs light emitted from the erbium ions under transition states, whereby is amplified. Then, the amplified optical signal is derived via the optical isolator 7 from the optical output terminal 9.

In this embodiment, light which is emitted from the Fabry-Perot LD element 11 of the 980 nm class pumping light source is collimated by the collimator lens 12, and only such light with a specific wavelength passes through the BPF 14. The passed light with the specific wavelength is condensed by the condenser lens 13 and then the condensed light with the specific wavelength is coupled to the optical fiber 15.

A portion of the light coupled to the optical fiber 15 is reflected on the reflection point 30 thereof. The reflected light is reflected again by a rear surface of the Fabry-Perot type element 11, whereby an external resonator is formed.

With employment of this external resonator, only a specific wavelength determined by the BPF 14, for instance, such a wavelength having a half-width within the range of 1 to 5 nm, may be selected to oscillate pumping light in a narrow bandwidth within the 980 nm-band Fabry-Perot type LD element 11 whose oscillating wavelength is originally wide.

The pumping light oscillated in the narrow bandwidth by the external resonator passes through the collimator module unit 101, and is externally derived by the optical fiber 23, and thereafter is entered via either the WDM couplers 3 or 4 into the EDF 5.

As the specific wavelength which the BPF 14 assembled in the pumping light source passes therethrough, 975 nm is selected for the pumping light source 1, and 978 nm is selected for the pumping light source 2.

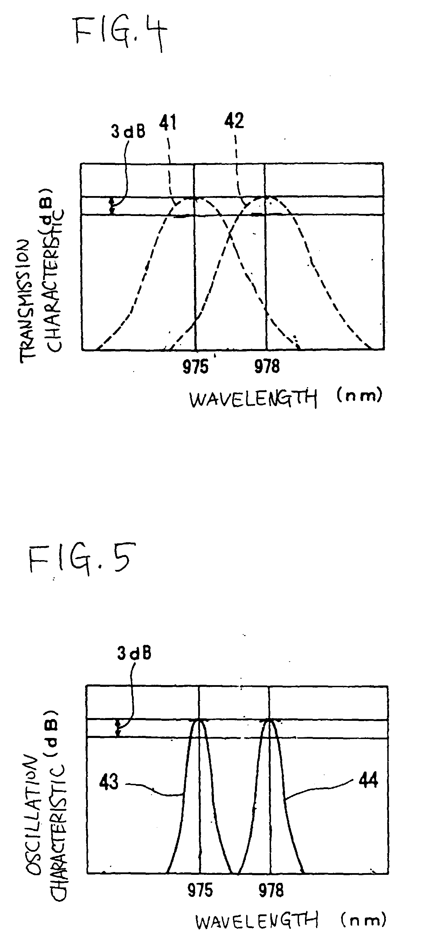

Since these pumping lights have different center wavelengths, there is no problem such that one pumping light from one pumping light source is entered into the other pumping light source causing interference to occur between the pumping lights. Moreover, as shown in FIG. 4, the transmission characteristic of the BPF 14 for the pumping light source 1 shows such a characteristic as shown by a graph 41 and also the transmission characteristic of the BPF for the pumping light source 2 shows such a characteristic represented by a graph 42. That is, both pumping lights which the respective BPF 14 pass are separated from each other such that the corresponding transmission characteristics are no more than at least 3 dB below their peaks. Thus, pumping light from one pumping light source does not pass through the BPF 14 of the other pumping light source, whereby the pumping light sources 1 and 2 are stably operable without affecting each other.

Also, as indicated by graphs 43 and 44 shown in FIG. 5, the oscillation characteristics of the pumping light sources 1 and 2 are made in a narrow bandwidth by the external resonator. As a result, it can be understood that the oscillation characteristics of the pumping light sources 1 and 2 can be sufficiently cut off by the other BPF 14.

Also, in this embodiment, the center wavelengths of the pumping light sources 1 and 2 have been explained as 975 nm and 978 nm, respectively. The present invention is not limited to these wavelengths. That is, when wavelengths of the pumping light sources 1 and 2 are present within the effective wavelength range of the EDF 5 and are separated from each other by more than, or equal to approximately 1 nm, a similar effect may be achieved.

The structure of the pumping light source is not limited to that shown in FIG. 2. If a pumping light source has an external resonator, or can amplify only the narrow wavelength band passed by the BPF, such a pumping light source can be employed.

A second embodiment of a pumping light source is shown in FIG. 3. In this embodiment, an optical wavelength multiplier 102 is coupled to the LD module element 100 via the optical fiber 15. The optical wavelength multiplier 102 performs the same function as the WDM couplers 3 and 4, and further has a fiber terminal 30a. The fiber terminal 30a is utilized as a reflection point to form an external resonator. Then, it is possible to achieve a similar effect even when the collimator module unit 101 is not used.

The optical amplifier of the present invention can be realized in the stable bidirection pumping system because the BPF 14 is built in the pumping light sources 1 and 2, and the wavelengths of two sets of the pumping light sources 1 and 2 are separated from each other by more than, or equal to approximately 1 nm.

Furthermore, since the pumping light sources 1 and 2 are oscillated in the narrow bandwidths by the external resonator, the line width is made narrow, smaller than, or equal to 1 nm.

As a result, even when light of one pumping light source is entered into the other pumping light source, this incident light is cut off by the BPF and thus, is not entered into the pumping light source. Therefore, the operation of the pumping light source can become very stable.

The invention may be embodied in other specific forms without departing from the spirit or essential characteristics thereof. The present invention embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An optical fiber amplifier, comprising:
an optical fiber to which an optical signal is input;
a first light source for supplying a first pumping light to said optical fiber, the first pumping light having a first center wavelength within a predetermined wavelength band, whereby said optical fiber amplifies the optical signal; and
a second light source for supplying a second pumping light to the optical fiber, the second pumping light having a second center wavelength within the predetermined wavelength band, and the second center wavelength being different from the first center wavelength, whereby said optical fiber amplifies the optical signal.

2. The optical fiber amplifier as claimed in claim 1, wherein the predetermined wavelength band is a 980 nm band.

3. The optical fiber amplifier as claimed in claim 1 or 2, wherein the second center wavelength is separated from the first center wavelength by at least 1 nm.

4. The optical fiber amplifier as claimed in claim 3, wherein the second center wavelength is separated from the first center wavelength by at least 1 nm.

5. The amplifier as claimed in claim 1, 2, 3 or 4,
wherein said optical fiber has an input side to which the optical signal is input, and said first light source supplies the first pumping light to the input side of said optical fiber.

6. The optical fiber amplifier as claimed in claim 5 wherein said optical fiber has an output said from which the optical signal is output, and said second light source supplies the second pumping light to the output side of said optical fiber.

7. An optical fiber amplifier, comprising:
an optical fiber to which an optical signal is input;
a first light source for supplying a first pumping light to said optical fiber, the first pumping light having a first center wavelength, whereby said optical fiber amplifies the optical signal; and
a second light source for supplying a second pumping light to the optical fiber, the second pumping light having a second center wavelength separated from the first center wavelength within the range of 1 to 10 nm, whereby said optical fiber amplifies the optical signal.

8. The optical fiber amplifier as claimed in claim 7 wherein each of the first center wavelength and the second center wavelength is within a wavelength of 980 nm band.

9. The optical fiber amplifier as claimed in claims 7 or 8, wherein said first light source supplies the first pumping light to an input side of said optical fiber, the optical signal to be amplified is inputted to the input side, and said second light source supplies the second pumping light to an output side of said optical fiber, the optical signal amplified by said optical fiber is outputted from the output side.

10. The amplifier as claimed in anyone of claims 1 to 9,
wherein the first center wavelength is substantially equal to 975 nm and the second center wavelength is substantially equal to 978 nm.

11. The amplifier as claimed in anyone of claims 1 to 10,
wherein said optical fiber includes a rare earth element.

12. The optical fiber amplifier as claimed in claim 11, wherein the rare earth element is erbium.

13. The amplifier as claimed in anyone of claims 1 to 12,
wherein each of said first and second light sources has a resonator which narrows each wavelength of the first and second pumping light, respectively.

14. The amplifier as claimed in anyone of claims 1 to 13,
wherein each of said first and second light sources has a band pass filter which passes light with a specified wavelength.

15. The optical fiber amplifier as claimed in claim 14, wherein said band pass filter passes light with the specified wavelength substantially equal to one of the first center wavelength and the second center wavelength.

16. The optical fiber amplifier as claimed in claim 15, wherein a half-width of said band pass filter is within the range of 1 to 5 nm.

17. The optical fiber amplifier as claimed in claim 16 wherein the half-width is within the range of 2 to 3 nm.

18. A method of amplifying an optical signal, the method comprising:
inputting an optical signal to an optical fiber which has an input side and an output side;
supplying a first pumping light to the input side of the optical fiber, whereby amplifying the optical signal, wherein the first pumping light has a first center wavelength within a predetermined wavelength band; and
supplying a second pumping light to the output side of the optical fiber, whereby amplifying the optical signal, wherein the second pumping light has a second center wavelength within the predetermined wavelength and the second center wavelength is different from the first center wavelength.

19. The method as claimed in claim 18 wherein the predetermined wavelength band is a 980 nm band.

20. The method as claimed in claim 18 or 19, wherein the second center wavelength is separated from the first center wavelength by at least 1 nm.

21. A method of amplifying an optical signal, the method comprising:
inputting an optical signal to an optical fiber which has an input side and an output side;
supplying a first pumping light to the input side of the optical fiber, whereby amplifying the optical signal, wherein the first pumping light has a first center wavelength; and
supplying a second pumping light to the output side of the optical fiber, whereby amplifying the optical signal, wherein the second pumping light has a second center wavelength separated from the first center wavelength within the range of 1 to 10 nm

22. The method as claimed in claim 21, wherein each of the first center wavelength and the second center wavelength is within a wavelength of 980 nm band.

23. The method as claimed in claim 22 wherein the first center wavelength is substantially equal to 975 nm and the second center wavelength is substantially equal to 978 nm.

24. The method as claimed in anyone of claims 18 to 23, wherein the optical fiber includes a rare earth element.

25. The method as claimed in claim 24, wherein the rare earth element is erbium.
